# EUROPÄISCHE PATENTANMELDUNG

(11) **EP 2 455 415 A1**
(43) Veröffentlichungstag der Anmeldung: **23.05.2012**
(21) Anmeldenummer: 10191484.4
(22) Anmeldetag: 17.11.2010
(51) Int. Cl.: C08G 63/08, C08G 63/80, C08G 63/90

(54) **Verfahren zur Herstellung von niedermolekularen, resorbierbaren Polyestern, die mit dem Verfahren herstellbaren niedermolekularen resorbierbaren Polyester und deren Verwendung**

(71) Anmelder: Evonik Röhm GmbH, 64293 Darmstadt (DE)
(72) Erfinder: Bocionek, Dirk, Dr., 55218 Ingelheim am Rhein (DE); Enderle, Anja, Dr., 55437 Ockenheim (DE)

(57) **Zusammenfassung**

Die Erfindung betrifft ein Verfahren zur Herstellung von niedermolekularen, resorbierbaren Polyestern durch Schmelzepolymerisation und anschließende Reinigung des erhaltenen Rohpolymers sowie die mit dem Verfahren herstellbaren niedermolekularen, resorbierbaren Polyester, wobei durch gezielte Auswahl des Kettenlängenmoderators die Eigenschaften der Polyester eingestellt werden können. Die niedermolekularen, resorbierbaren Polyester finden insbesondere im medizinischen oder pharmazeutischen Bereich Verwendung.

## Beschreibung

Die Erfindung betrifft ein Verfahren zur Herstellung von niedermolekularen, resorbierbaren Polyestern durch Schmelzepolymerisation und anschließende Reinigung des erhaltenen Rohpolymers sowie die mit dem Verfahren herstellbaren niedermolekularen, resorbierbaren Polyester und deren Verwendung.

### HINTERGRUND DER ERFINDUNG

### TECHNISCHES GEBIET

Aus resorbierbaren Polymeren hergestellte medizinische Produkte stellen aufgrund ihrer vielfältigen Anwendungsmöglichkeiten in der modernen Medizin und in Zusammenhang mit den Fortschritten in der technischen Entwicklung eine wichtige Alternative zu konventionellen medizinischen Anwendungen dar. Es handelt sich um hochtechnologische Produkte, die als Resultat jahrelanger Forschung und Entwicklung erhalten werden.

Resorbierbare Polymere gemäß der vorliegenden Erfindung sind aliphatische Polyester in Form von Homopolymeren, insbesondere auf der Basis von Lactiden (L-Lactid, D-Lactid, D,L-Lactid, meso-Lactid) oder Glycoliden, oder in Form von Copolymeren mit zwei oder mehr unterschiedlichen Comonomereinheiten, insbesondere auf Basis der genannten Monomeren.

Resorbierbare Polyester werden ohne weiteres im Körper zu den monomeren Verbindungen abgebaut, die dann nach Metabolisierung oder in unveränderter Form ausgeschieden werden. Das Abbauprodukt von Polylactid ist beispielsweise Milchsäure, die ein Zwischenprodukt im Kohlenhydratabbau darstellt und in allen Geweben enthalten ist. Die L-Form der Milchsäure wird im Citrat-Zyklus zu Wasser und Kohlendioxid abgebaut, die D-Form wird in nicht-metabolisierter Form ausgeschieden. Polyglycolid wird über Glycolsäure und weiter durch Glycolat-Oxidase und die Transaminase zu Glycin metabolisiert.

Die resorbierbaren Polyester sind auch mit anderen abbaubaren Monomeren kombinierbar oder können durch Zusatz von Hilfsstoffen modifiziert werden.

Die Herstellung der Polyester kann über eine Ringöffnungs-Polymerisation erfolgen, die eine Gleichgewichtsreaktion darstellt. Diese wird anhand der nachfolgenden Reaktionsgleichungen veranschaulicht:
(a) ringöffnende Polymerisation eines Lactids (L-Lactid, D-Lactid, D,L-Lactid, meso-Lactid) zum Homopolymer: 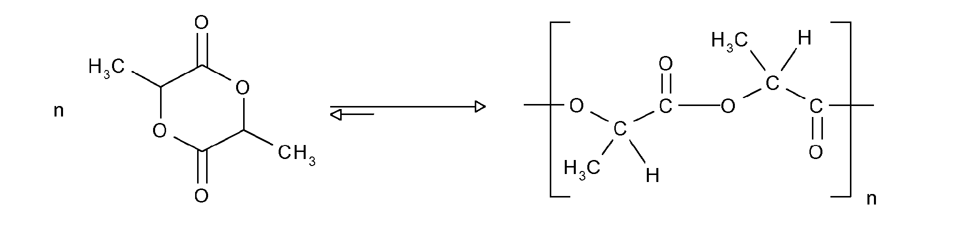
(b) ringöffnende Polymerisation eines Lactids und eines Glycolids zum Copolymer: 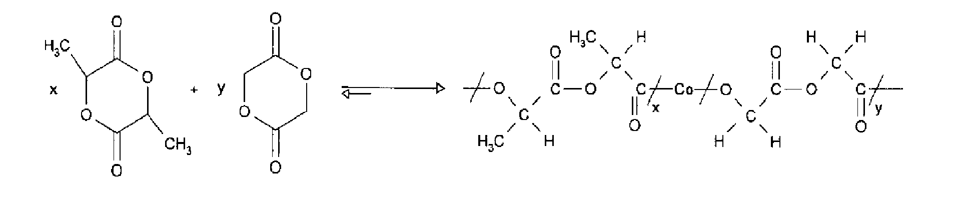
wobei n jeweils die Gesamtzahl der wiederkehrenden Einheiten darstellt und x und y die jeweilige Anzahl der Bausteine angibt.

Die cyclischen Anhydride werden als Ausgangsmaterialien beispielsweise aus den entsprechenden Hydroxycarbonsäuren unter entwässernder Kondensation und Bildung eines cyclischen Dimers nach Ringschluss erhalten. Ein Lactid ist ein cyclisches Dimer aus Milchsäure bzw. 2-Hydroxypropansäure; ein Glycolid ist ein cyclisches Dimer aus Glycolsäure bzw. Hydroxyessigsäure. Das Lactid kann in D-, L-, D,L- oder meso-Form vorliegen. Das D-Lactid resultiert aus der D-Milchsäure, das L-Lactid wird aus der L-Milchsäure erhalten, das meso-Lactid ergibt sich als cyclisches Dimer aus D,L-Milchsäure und das D,L-Lactid stellt eine racemische Mischung aus D-Lactid und L-Lactid dar.

Bei der Ringöffnungs-Polymerisation lassen sich zwei Verfahrensvarianten unterscheiden: die gerührte Schmelzepolymerisation und die ungerührte Massepolymerisation. Erstere zeichnet sich durch kürzere Reaktionszeiten, letztere durch mildere Reaktionsbedingungen aus. Erfindungsgemäß wird daher eine Schmelzepolymerisation eingesetzt.

Vor allem Polyester im niedermolekularen Bereich sind von wachsendem Interesse, da diese schnell resorbierbare Polymere mit einer Abbauzeit im Bereich weniger Wochen darstellen. So bauen sich beispielsweise Polyglycolid, Poly(D,L-lactid) und Poly(L-lactid) mit jeweils niedrigem Molekulargewicht bereits innerhalb einiger Wochen ab. Die Polyester ermöglichen eine Reihe an Variationsmöglichkeiten hinsichtlich ihres Abbauverhaltens, wie zum Beispiel die Auswahl der Enantiomere, das gewählte Verhältnis von Lactid zu Glycolid sowie die Wahl der Endgruppen, die durch die Wahl des Kettenlängenreglers bestimmt wird.

Insbesondere Polyester im niedermolekularen Bereich zeigen eine Abhängigkeit der Hydrophilie von der Endgruppe und verbunden damit einen Einfluss der Endgruppe auf Polymereigenschaften wie Abbauzeit oder Säurezahl. Zudem können über die Endgruppe Verkapselungseigenschaften für pharmazeutische Formulierungen gesteuert werden. Neben diesen Eigenschaften können die Endgruppen auch für weitere Modifikationen als Bindungsstellen dienen. Somit ist nicht nur die Art der Endgruppe sondern auch die Anzahl der Endgruppen und somit potentieller Bindungsstellen entscheidend. Eine Erhöhung der Anzahl der Hydroxygruppen erhöht beispielsweise die Säurezahl eines Polymers.

Durch Auswahl der Monomereinheiten der Polyester können deren Eigenschaften gezielt eingestellt und insbesondere auf die verschiedenen Anwendungsbereiche maßgeschneidert werden. Reines Poly(L-lactid) ist teilkristallin; Poly(D,L-lactid) und dessen Copolymere liegen in amorpher Form vor. Derartige amorphe Polymere weisen den Vorteil einer guten Löslichkeit in organischen Lösungsmitteln, beispielsweise in Aceton, Chloroform oder Dichlormethan, auf. Reines Poly(L-lactid) ist beispielsweise nicht in Aceton, sondern nur in halogenierten Lösungsmitteln löslich. Die amorphen Polymere sind daher von Vorteil, da auf halogenierte Lösungsmittel völlig verzichtet werden kann. Die gute Löslichkeit ist außerdem vorteilhaft für die Herstellung oder auch Verarbeitung dieser Polymere, beispielsweise wenn hieraus Produkte hergestellt werden sollen, wobei die Verarbeitung der Polymere über einen Lösungsschritt erfolgen muss. Dies ist beispielsweise bei der Herstellung von Mikrokapseln der Fall. Diese Polymere werden daher insbesondere für die Herstellung von pharmazeutischen Formulierungen verwendet. Der Einsatzbereich von Copolymeren auf Basis von Milch- und Glycolsäure ist demnach vorteilhafterweise die Herstellung von Wirkstoffkapseln zur kontrollierten Freisetzung pharmazeutischer Wirksubstanzen.

Homopolymere aus Milchsäure (Poly-L-lactide) kommen hauptsächlich für die Produktion resorbierbarer medizinischer Implantate im menschlichen oder tierischen Körper zum Einsatz, wie beispielsweise als Material für Fixationselemente, Folien, Membranen oder Nahtfäden.

Aus dem Stand der Technik sind resorbierbare Polyester bereits bekannt geworden:
So beschreiben J. Dahlmann und G. Rafler in der Veröffentlichung "Biodegradable polymers, 7th comm., On the mechanism of ring-opening polymerization of cyclic esters of aliphatic hydroxycarboxylic acids by means of different tin compounds" aus Acta Polymer, 44, Seiten 103-107, 1993, den Einfluss von Zinnverbindungen als Katalysatoren auf die Ringöffnungspolymerisation von Lactiden und Lactonen, insbesondere am Beispiel von D,L-Lactid. Die untersuchten Zinnverbindungen waren z.B. Zinncarboxylate, wie Zinn(II)diacetat und Zinn(II)dioctanoat und Tetraorganostannane, wie Zinn(II)tetraphenyl.
Die Polymerisation wurde unter Stickstoff in einem Dreihalskolben durchgeführt, wobei zunächst die Monomeren geschmolzen, anschließend die Zinnverbindung und, wenn notwendig, weitere Verbindungen, zugegeben wurden. Zur Entfernung von Restmonomeren wurde das Produkt in Chloroform gelöst und bei Raumtemperatur mit Methanol gefällt. Eine Erhöhung der Katalysatormenge führte zu einer Erhöhung der Polymerisationsgeschwindigkeit und Zunahme des Polymerisationsgrades. Auch die Zugabe einer Verbindung mit einer alkoholischen OH-Gruppe, wie Milchsäureethylester,
wurde untersucht und es wurde gefunden, dass diese Verbindungen bei der Polymerisation des D,L-Lactids zu einer Abnahme des Polymerisationsgrads, abhängig von der eingesetzten Menge, führen.

Die EP 0 624 613 A2 offenbart ein Verfahren zur Herstellung von Polyestern durch eine Ringöffnungs-Polymerisation einer cyclischen Esterverbindung in Gegenwart einer Hydroxylverbindung als Molekulargewichtsregulator, wobei das Molekulargewicht des Polyesters genau in dem gewünschten Bereich eingestellt werden kann, indem die Menge an freier Carbonsäure in der cyclischen Esterverbindung möglichst genau abgeschätzt und hieraus die Menge an einzusetzender Hydroxylverbindung abgeleitet wird. Als Hydroxylverbindung werden Alkohole, Hydroxycarbonsäuren und Saccharide genannt. Die Abschätzung der Menge an freier Carbonsäure erfolgt über die Messung der elektrischen Leitfähigkeit der cyclischen Esterverbindung in Lösung. Die Polymerisation, z.B. zu Polyglycolsäure, wird bei sehr hohen Temperaturen von etwa 235°C durchgeführt.

Das US-Patent 5,502,158 bezieht sich auf abbaubare Materialien, die nicht-toxische hydrolytisch abbaubare Polymere und nicht-toxische Modifizierungsmittel enthalten. Das Polymer ist typischerweise Polymilchsäure. Als Modifizierungsmittel finden Verwendung: Dicarbonsäuren und deren Derivate, Polyester von Dicarbonsäuren, Tricarbonsäuren und deren Derivate, Polyester von Tricarbonsäuren, cyclische Diester von alpha-Hydroxycarbonsäuren und deren Derivate und Oligomere, beta-, delta, gamma- und epsilon-Lactone, Oligomere von alpha-Hydroxycarbonsäuren, Ester von Oligomeren von alpha-Hydroxycarbonsäuren, Benzoesäurederivate, Epoxyderivate, Glykolderivate, Phthalsäurederivate, Phosphorsäurederivate, Ketone, Amide, Nitrile und deren Kombinationen. Es wird beschrieben, dass die Modifizierungsmittel bekanntermaßen dazu dienen, im Polymer den Glasumwandlungspunkt (oder die Glasumwandlungstemperatur) abzusenken. Es werden insbesondere Filme, Formprodukte, Laminate, Schäume, Pulver, Non-wovens, Kleber und Beschichtungen bereitgestellt, die nach Gebrauch recycelt werden können.

Schließlich beschreibt das US-Patent 6,362,308 B1 Copolymere aus Lactid und Glycolid mit hohem Glycolidanteil sowie ein Verfahren zur Herstellung des Copolymers, wonach eine Mischung, umfassend D,L-Lactid, Glycolid, eine Hydroxycarbonsäure und Zinnoctoat auf eine Temperatur zwischen etwa 175 und 200°C erhitzt wird, um das Copolymer herzustellen.

Die Praxis hat gezeigt, dass die bekannten resorbierbaren Polyester in Einzelfällen nicht in hinreichendem Maße über das gewünschte Eigenschaftsprofil verfügen und Nachteile aufweisen. So ist bekannt, dass die thermischen Eigenschaften dieser Polymere, wie die Glasumwandlungstemperatur, neben ihrer amorphen Struktur maßgeblich von der Kettenlänge abhängen. Je kürzer die Kettenlänge und damit je niedermolekularer das Polymer, desto geringer ist der Glasumwandlungspunkt. Vor allem bei niedermolekularen Polymeren hat auch der eingesetzte Kettenlängenregler einen Einfluss auf die Endgruppen und damit auf die chemischen und thermischen Eigenschaften. Bei amorphen Copolymeren aus D,L-Lactid und Glycolid liegt der Glasumwandlungspunkt, abhängig vom Molekulargewicht, in einem Temperaturbereich zwischen ca. 35°C und 50°C. Bei Polyestern aus nicht glycolidhaltigen Polymeren liegt der Glasumwandlungspunkt etwas höher.

Durch die Verwendung von langkettigen Alkoholen als Kettenlängenregler wird ein relativ hydrophobes Polymer erhalten. Die Verwendung von beispielsweise Milchsäure als Kettenlängenregler ergibt deutlich hydrophilere Polymere mit einer erhöhten Anzahl an funktionellen Gruppen als potentielle Bindungsstellen. Dies ist z.B. bei Verwendung der Polymere als Einschlußverbindungen von erhöhtem Interesse. Verkapselungseigenschaften und Abbaugeschwindigkeit sind nur in einem engen Fenster beeinflussbar. Insbesondere bei der Verkapselung hydrophiler Wirkstoffe stoßen hydrophobe Polymere an ihre Grenzen.

Weitere Nachteile ergeben sich aus den bekannten Herstellungsverfahren. Die ringöffnende Polymerisation, beispielsweise von D,L-Lactid und/oder Glycolid, stellt eine Gleichgewichtsreaktion dar, so dass in den Rohpolymerisaten immer ein Restgehalt an nicht umgesetzten Monomeren vorhanden ist. Der Einsatz im pharmazeutischen und medizinischen Bereich erfordert jedoch die Einhaltung eines extrem hohen Qualitätsniveaus, wobei derartige Restgehalte in keinem Fall toleriert werden können. Im Hinblick auf den vorgesehenen Verwendungszweck im menschlichen oder tierischen Körper und auch unter dem Aspekt, Implantate mit reproduzierbaren Eigenschaften herzustellen, müssen die Restmonomere daher auf ein Mindestmaß herabgesenkt bzw. nahezu vollständig entfernt werden. Hierzu sind in der Regel aufwändige Aufarbeitungen erforderlich, um die hohe Qualität sicherzustellen. Beispielsweise müssen separate Reinigungs- und Aufarbeitungsschritte durchgeführt werden.

Ein weiterer Nachteil der im Polymer enthaltenen Restmonomeren ist, dass diese als Weichmacher fungieren und somit den Glasumwandlungspunkt in unerwünschtem Maße weiter absenken. Nachteilig ist weiterhin, dass Restmonomere generell den Abbau katalysieren und damit beschleunigen.

Aufgrund der oben geschilderten Nachteile und bekannten wertvollen Eigenschaften von resorbierbaren Polyestern besteht demnach ein Bedarf, weitere niedermolekulare, resorbierbare Polyester bereitzustellen, welche die Nachteile aus dem Stand der Technik nicht aufweisen und deren Eigenschaften gezielt an die gewünschten Anwendungen angepasst werden können. Weiterhin soll auch ein Herstellungsverfahren für niedermolekulare resorbierbare Polyester zur Verfügung gestellt werden, das als industriell anwendbares Verfahren zur Herstellung von niedermolekularen, resorbierbaren Polyestern geeignet ist und welches es gestattet, die niedermolekularen, resorbierbaren Polyester in hoher Qualität und in großem Maßstab herzustellen.

### KURZE ZUSAMMENFASSUNG DER ERFINDUNG

Die Erfindung betrifft ein Verfahren zur Herstellung von niedermolekularen, resorbierbaren Polyestern durch Schmelzepolymerisation und anschließende Reinigung des erhaltenen Rohpolymers sowie die mit dem Verfahren herstellbaren niedermolekularen, resorbierbaren Polyester, wobei durch gezielte Auswahl des Kettenlängenmoderators die Eigenschaften der Polyester eingestellt werden können. Gegenstand der Erfindung ist auch eine Vorrichtung zur Durchführung des Verfahrens sowie die Verwendung der erfindungsgemäß hergestellten resorbierbaren Polyester im medizinischen und pharmazeutischen Bereich.

### DETAILLIERTE BESCHREIBUNG DER ERFINDUNG

Ein erster Gegenstand der vorliegenden Erfindung betrifft ein Verfahren zur Herstellung von niedermolekularen resorbierbaren Polyestern, umfassend die Schritte
(a) Aufschmelzen von Monomeren in einem Reaktionsgefäß;
(b) Zugabe eines Katalysators;
(c) Zugabe eines Kettenlängenmoderators, der ausgewählt ist aus der Gruppe bestehend aus Hydroxydicarbonsäuren und, Hydroxytricarbonsäuren;
(d) Homogenisieren der Reaktionsmischung;
(e) Durchführen der Polymerisationsreaktion bis zum erwünschten Umsetzungsgrad der Polymerisation;
(f) Lösen des erhaltenen Rohpolymers in Aceton;
(g) Ausfällen des Polymers durch Zugeben von Wasser;
(h) Abtrennen des erhaltenen Polymers;
(i) gegebenenfalls Zerkleinern des erhaltenen Polymers und
(j) Trocknen des Polymers.

Nach dem erfindungsgemäßen Verfahren werden zunächst in Schritt (a) die Monomeren geschmolzen. Die Temperatur und Dauer hierfür hängen von den ausgewählten Monomeren ab.

Die Monomeren können ausgewählt werden aus jeder Art von Monomeren, welche nach Polymerisation zu einem Polyester führen. Bevorzugt sind solche Monomere, welche durch ringöffnende Polymerisation der entsprechenden cyclischen Monomeren polymerisiert werden können. Bevorzugt sind daher cyclische Esterverbindungen. Exemplarische cyclische Esterverbindungen, die erfindungsgemäß als Monomere zum Einsatz kommen können, sind: Glycolid, Lactid, wie beispielsweise L-Lactid, D-Lactid, D,L-Lactid oder meso-Lactid, beta-Propiolacton, gamma-Butyrolacton, delta-Valerolacton, epsilon-Caprolacton, 3-Methyl-1,4-dioxa-2,5-dion, p-Dioxanon, Morpholin-2,5-dion, Morpholin-2-on und Mischungen dieser voranstehend genannten Monomere.

Ein weiterer Gegenstand der vorliegenden Erfindung betrifft das voranstehend genannte Verfahren zur Herstellung von resorbierbaren Polyestern, dadurch gekennzeichnet, dass die verwendeten Monomere ausgewählt sind aus der Gruppe bestehend aus Glycolid, L-Lactid, D-Lactid, D,L-Lactid, meso-Lactid, beta-Propiolacton, gamma-Butyrolacton, delta-Valerolacton, epsilon-Caprolacton, 3-Methyl-1,4-dioxa-2,5-dion, p-Dioxanon, Morpholin-2,5-dion, Morpholin-2-on und Mischungen dieser voranstehend genannten Monomere.

Ein weiterer Gegenstand der vorliegenden Erfindung betrifft das voranstehend genannte Verfahren zur Herstellung von resorbierbaren Polyestern, dadurch gekennzeichnet, dass die verwendeten Monomere ausgewählt sind aus der Gruppe bestehend aus Glycolid, L-Lactid, D-Lactid, D,L-Lactid, meso-Lactid und Mischungen dieser Monomere.

Während des gesamten Verfahrens kann der über der Reaktionsmasse befindliche Raum, vorzugsweise mittels eines inerten und wasserfreien Gases, inertisiert werden. Bevorzugt werden hierfür Argon, Helium oder Stickstoff verwendet, besonders bevorzugt ist Stickstoff. Eine inerte Atmosphäre ist jedoch nicht generell erforderlich, kann aber, zum Beispiel aus Sicherheitsgründen, von Vorteil sein.

Das Aufschmelzen der Monomeren (eine Monomerverbindung) oder Monomerenmischung (mehrere verschiedene Monomerverbindungen) findet in einem Reaktionsgefäß vorzugsweise unter Rühren statt. Je nach Maßstab kann in einem kleinen Reaktionsgefäß, zum Beispiel im Labor, oder auch in großindustriellem Maßstab gearbeitet werden. Vorzugsweise wird in einem Rührwerksreaktor gearbeitet, dessen Größe je nach Maßstab ausgewählt wird.

Als Rührwerksreaktor zum Aufschmelzen und Homogenisieren der Reaktionsmischung kann beispielsweise ein konventioneller Reaktor eingesetzt werden, dessen Innenwandung mit einem gegenüber der Reaktionsmischung chemisch inerten Werkstoff, beispielsweise Edelstahl, Glas, Emaille oder Hastelloy oder einem ähnlichen Material ausgekleidet ist. Die bevorzugte Größe des Reaktors richtet sich nach der gewünschten Chargengröße und kann zweckmäßigerweise in einem Bereich von etwa 2 bis 100 Litern liegen.

Die Polymerisation findet unter Verwendung eines Katalysators statt. Als Katalysatoren können Verbindungen verwendet werden, die ausgewählt sind aus der Gruppe bestehend aus Zinnverbindungen, wie beispielsweise Zinnchlorid, Zinnoxid, Zinnfluorid, Tetraphenylzinn, Zinnoctanoat, Zinnacetat oder Zinnstearat, Zink oder Zinkverbindungen, wie beispielsweise metallisches Zink, Zinkoxid, Zink-L-lactat, Zinkstearat, ZnCl₂, ZnBr₂ oder Znl₂, Antimonverbindungen, wie beispielsweise Antimontrioxid oder Antimontrifluorid, herkömmliche Wismuth-, Blei-, Arsen-, Bor- oder Phosphorverbindungen, wie beispielsweise Wismutnitrat, Bleioxid, Bleistearat, Bortrifluorid, Tetraethylammoniumborid, Tributylarsin, Tributylphosphin, Triethylamin, Tributylamin oder andere katalytisch wirksame Verbindungen. Besonders bevorzugt sind Zinnverbindungen, ganz besonders bevorzugt sind Zinn(II)ethylhexanoat (Zinnoctanoat) oder Zinn(II)chlorid-Dihydrat.

Die Menge an Katalysator hängt von den Monomeren, der Art des ausgewählten Katalysators, den gewählten Verfahrensbedingungen, wie Temperatur, Reaktionsdauer, Polymerisationsgrad und dergleichen ab. Beim erfindungsgemäßen Verfahren werden die Katalysatoren bevorzugt in geringen Konzentrationen eingesetzt, um durch eine geringe Reaktionsgeschwindigkeit einerseits die Wärmeentwicklung während der Polymerisation zu minimieren und andererseits zu verhindern, dass die Reaktionsmasse vorzeitig und unkontrolliert polymerisiert. Weiterhin ist der Einsatz nur geringer Katalysatormengen im Hinblick auf den Einsatz der Polyester im menschlichen Körper vorteilhaft. Im Falle von Zinnverbindungen liegen die bevorzugten Konzentrationen im Bereich von etwa 10 bis etwa 250 ppm, bevorzugt bei etwa 30 bis etwa 200 ppm (jeweils berechnet als Zinn, bezogen auf die gesamte Reaktionsmasse).

Die Zugabe des Katalysators gemäß Verfahrensschritt (b) kann als Substanz oder vorzugsweise als Lösung in einem inerten und physiologisch unbedenklichen Verdünnungsmittel erfolgen. Bevorzugte Verdünnungsmittel sind aliphatische oder aromatische Kohlenwasserstoffe, insbesondere Toluol oder Xylol.

Es können auch Mischungen von Katalysatoren eingesetzt werden.

Gemäß Verfahrensschritt (c) wird ein Kettenlängenmoderator zugegeben. Kettenlängenmoderatoren, die zur Regulierung der Kettenlänge eingesetzt werden, können prinzipiell alle Arten von Alkoholen darstellen. Daneben können auch Verbindungen verwendet werden, die neben der alkoholischen Hydroxylgruppe eine oder mehrere weitere funktionelle Gruppen tragen. Somit können die chemischen Eigenschaften des Kettenendes gezielt verändert werden.

Ein weiterer Gegenstand der vorliegenden Erfindung betrifft das voranstehend genannte Verfahren zur Herstellung von resorbierbaren Polyestern, dadurch gekennzeichnet, dass als Kettenlängenmoderator eine Verbindung verwendet wird, die ausgewählt ist aus der Gruppe bestehend aus Hydroxycarbonsäuren, Hydroxydicarbonsäuren, Hydroxytricarbonsäuren oder Hydroxycarbonsäureestern.

Ein weiterer Gegenstand der vorliegenden Erfindung betrifft das voranstehend genannte Verfahren zur Herstellung von resorbierbaren Polyestern, dadurch gekennzeichnet, dass als Kettenlängenmoderator eine Verbindung verwendet wird, die ausgewählt ist aus der Gruppe bestehend aus Hydroxydicarbonsäuren und Hydroxytricarbonsäuren.

Die verwendeten Hydroxycarbonsäuren können ausgewählt sein aus der Gruppe bestehend aus Milchsäure, Glycolsäure oder Hydroxycapronsäure.

Die verwendeten Hydroxydicarbonsäuren können ausgewählt sein aus der Gruppe bestehend aus Äpfelsäure (2-Hydroxybernsteinsäure) oder Weinsäure (2,3-Dihydroxybernsteinsäure).

Die verwendete Hydroxytricarbonsäure kann ausgewählt sein aus der Gruppe bestehend aus Zitronensäure.

Die verwendeten Hydroxycarbonsäureester können ausgewählt sein aus der Gruppe bestehend aus Milchsäureester, Glycolsäureester oder Hydroxycapronsäureester, wobei die entsprechenden Ethylester dieser Verbindungen, wie beispielsweise Milchsäureethylester, Glycolsäureethylester und Hydroxycapronsäureethylester, bevorzugt verwendet werden.

Ein weiterer Gegenstand der vorliegenden Erfindung betrifft das voranstehend genannte Verfahren zur Herstellung von resorbierbaren Polyestern, dadurch gekennzeichnet, dass als Kettenlängenmoderator Äpfelsäure oder Zitronensäure verwendet wird.

Es können auch Mischungen der voranstehend genannten Kettenlängenmoderatoren zum Einsatz kommen.

Es wurde beobachtet, dass je mehr Kettenlängenmoderator vorliegt, umso geringer das Molekulargewicht und damit auch der Glasumwandlungspunkt werden. Bei Polymeren mit vergleichbarer Kettenlänge führen zudem unterschiedliche Endgruppen zu unterschiedlichen Glasumwandlungspunkten Tg. Prinzipiell hat eine Erhöhung des Glasumwandlungspunkts bei Polyestern Vorteile bei einem Einsatz im menschlichen oder tierischen Körper, beispielsweise in Form von Implantaten oder pharmazeutischen Formulierungen. Insbesondere interessant sind Poylester mit einem Glasumwandlungspunkt oberhalb von 37°C.

Die erfindungsgemäßen Polyester müssen eine ausreichende Formstabilität mit einer gewünschten Hydrolysierbarkeit bzw. Abbaubarkeit für den gewünschten Verwendungszweck vereinen, um ihre Form und Festigkeit bei der Verarbeitung und Verwendung beizubehalten. Die erfindungsgemäßen Polyester müssen auch als verarbeitete Formulierung, zum Beispiel in Form von Mikropartikeln, ausreichend formstabil bleiben. Insbesondere bei Polyestern mit sehr niedrigem Glasumwandlungspunkt besteht ansonsten die Gefahr, dass das Endprodukt bei Raumtemperatur zusammenklumpt. Aufgrund der erhöhten Glasumwandlungstemperatur durch entsprechende Auswahl des Kettenlängenmoderators, beispielsweise in Form von Milchsäureethylester oder einer Hydroxydicarbonsäure, insbesondere Äpfelsäure, kann demnach besser gewährleistet werden, dass das Polyestermaterial auch im menschlichen oder tierischen Körper seine Form und Festigkeit für die gewünschte Zeitdauer behält.

Ein weiterer Vorteil der erfindungsgemäßen Polyester ist, dass durch Vorliegen einer oder mehrerer freier Carboxylgruppen im Polymer die Hydrophilie des Polymers erhöht werden kann, was Auswirkungen auf den Abbau und die Freisetzung von Wirkstoffen hat. Besonders vorteilhaft sind als Kettenlängenmoderatoren Hydroxydicarbonsäuren oder Hydroxytricarbonsäuren, welche gegenüber einfachen Hydroxycarbonsäuren eine höhere Säurezahl aufweisen. Hierdurch können besonders nützliche Eigenschaften in den hergestellten Polyestern erzeugt werden, wie beispielsweise eine gesteigerte Wasseraufnahme der Polyester oder eine Erhöhung der verfügbaren freien Bindungsstellen.

Die Auswahl der jeweiligen Endgruppen und somit eine Erhöhung der Bindungsstellen kann zur Modifizierung der Eigenschaften der erfindungsgemäßen Polyester herangezogen werden, da es hierdurch z.B. gelingt, insbesondere bei Verwendung in Form von pharmazeutischen Formulierungen die Menge an enthaltenem Wirkstoff ("Verkapselungsrate") zu modifizieren, d.h. die Menge an enthaltenem Wirkstoff in gewünschter Weise zu erhöhen oder abzusenken. Weiterhin kann durch die ausgewählten Endgruppen auf die Art der Freisetzung, insbesondere das Freisetzungsprofil, des Wirkstoffs gezielt Einfluss genommen werden.

Die geschilderten vorteilhaften Eigenschaften der Polyester können erreicht werden, ohne dass auf andere Polymerbestandteile zurückgegriffen werden müsste, wodurch die Abbaubarkeit wieder beeinträchtigt werden könnte.

Durch den Einsatz verschiedener Kettenlängenmoderatoren können Polyester mit unterschiedlichen Endgruppen an einem Kettenende erhalten werden. Diese unterschiedlichen Kettenenden sind erfindungsgemäß insbesondere bevorzugt eine oder mehrere freie Carboxylgruppen (Milchsäure, Glycolsäure, Zitronensäure oder Äpfelsäure als Kettenlängenmoderator) oder Alkylester-Endgruppen (Milchsäureethylester als Kettenlängenmoderator). Selbstverständlich können auch andere Kettenlängenmoderatoren zum Einsatz kommen. Zur Bestimmung der jeweiligen Endgruppe kann beispielsweise der Säurewert anhand einer Titration bestimmt werden, und es können gegebenenfalls zusätzlich ¹H-NMR-Spektren aufgenommen werden.

Die bevorzugte Konzentration des Kettenlängenmoderators hängt von der Struktur des Moderators und vom gewünschten Molekulargewicht des Polymeren ab und liegt vorzugsweise zwischen 0 und etwa 40.000 ppm, besonders bevorzugt zwischen etwa 1.000 und etwa 40.000 ppm, insbesondere im Bereich von etwa 2.000 bis etwa 40.000 ppm, jeweils bezogen auf die gesamte Reaktionsmasse.

Der hier verwendete Begriff "etwa" bedeutet innerhalb ±20%, bevorzugt innerhalb ±10% und noch bevorzugter innerhalb ±5% eines vorgegebenen Wertes oder Bereichs.

Die Zugabe von Katalysator erfolgt stets nach dem Schmelzen der Monomere. Der Kettenlängenmoderator kann vor, während oder nach dem Aufschmelzen der Monomere zugegeben werden. Bevorzugt werden nach dem Aufschmelzen der Monomere erst der Katalysator und dann der Kettenlängenmoderator zugegeben. Die Reihenfolge der Verfahrensschritte (b) und (c) kann auch vertauscht werden; die Zugabe des Kettenlängenmoderators erfolgt dann vor der Zugabe des Katalysators. Der Kettenlängenmoderator kann auch bereits zu den Monomeren in das Reaktionsgefäß gegeben und zusammen mit den Monomeren geschmolzen und anschließend erst der Katalysator zugegeben werden. Katalysator und Kettenlängenmoderator können auch gleichzeitig zugegeben werden, dies erfolgt dann nach dem Aufschmelzen der Monomeren. Nach einer weiteren bevorzugten Ausführungsform der Erfindung kann der Katalysator auch im Kettenlängenmoderator gelöst werden und beide können zusammen zur Reaktionsmischung nach dem Schmelzen der Monomeren zugegeben werden; in diesem Fall wird als Kettenlängenmoderator bevorzugt Dodecanol verwendet.

Die Polymerisation gemäß Verfahrensschritt (e) wird in der Regel bei einer Temperatur im Bereich von etwa 150°C bis etwa 200°C durchgeführt, in Einzelfällen kann dieses Temperaturintervall aber auch verlassen werden.

Die erforderlichen Reaktionszeiten hängen von der Reaktivität des oder der Monomeren, der gewählten Temperatur und Katalysatorkonzentration und vom erforderlichen Umsetzungsgrad ab. Bevorzugt werden Reaktionszeiten im Bereich von etwa 2 bis etwa 24, weiter bevorzugt im Bereich von etwa 2 bis etwa 7 Stunden, besonders bevorzugt im Bereich von etwa 3 bis etwa 6 Stunden eingehalten. Diese Reaktionszeiten sind jedoch nur beispielhaft und können auch über- oder unterschritten werden.

Die Polymerisation wird nach Homogenisieren der erhaltenen Reaktionsmischung (Verfahrensschritt (d)), vorzugsweise unter Rühren, bis zum gewünschten Umsetzungsgrad, d.h. Polymerisationsgrad, durchgeführt. In der Regel ist der gewünschte Polymerisationsgrad erreicht, wenn von den eingesetzten Monomeren weniger als etwa 10 Gew.-%, vorzugsweise im Bereich von etwa 1.5 Gew.-% bis 5 Gew.-%, im erfindungsgemäß hergestellten Polymer enthalten sind.

Die Polymersiation kann chargenweise, halb-kontinuierlich oder kontinuierlich durchgeführt werden.

Nach der Polymerisation kann das Reaktionsgefäß, beispielsweise ein Reaktor, entleert werden. Die Entleerung eines Reaktors nach der Polymerisation kann zum Beispiel mittels konventioneller Pumpen, durch Schwerkraft oder auch durch Druckaufgabe mittels Inertgas, insbesondere Stickstoff erfolgen.

Zur Reinigung des aus der Polymerisation erhaltenen Rohpolymers kann dieses anschließend in Aceton gelöst werden (Verfahrensschritt(f)). Gegebenenfalls kann die erhaltene Lösung zur Entfernung potentiell vorhandener partikulärer Verunreinigungen filtriert werden. Der Filter ist für diesen Zweck vorzugsweise aus Kunststoff oder Edelstahl aufgebaut. Das Filtrieren wird bevorzugt durchgeführt, ist aber nicht in jedem Fall erforderlich.

Durch Zugabe eines Überschusses an Wasser wird das gelöste Polymer ausgefällt, während die Monomeren in Lösung bleiben und somit aus dem Polymer entfernt werden können (Verfahrensschritt (g) und (h)). Die Menge an zuzusetzendem Wasser ergibt sich aus der gewählten Ansatzmenge und kann vom Fachmann im Stand der Technik ohne weiteres durch einige wenige orientierende Versuche festgestellt werden.

Die Reinigung des erhaltenen Rohpolymers durch Lösen in Aceton, gegebenenfalls Filtrieren der Lösung und dann Ausfällen des Polymers aus der Lösung mit Wasser kann auch mehrfach wiederholt werden, bis der gewünschte Reinigungsgrad erreicht wird.

Zusätzlich kann nach dem Abtrennen des ausgefällten Polymers ein oder mehrmals mit Wasser gewaschen werden.

Besonders bevorzugt wird das ausgefällte Polymer kontinuierlich aus der Lösung entfernt. Dies kann beispielsweise mittels eines rotierenden Siebs oder auch in anderer Weise erfolgen.

Das Trocknen des gereinigten Polymers (Verfahrensschritt (j)) kann in üblicher Weise, beispielsweise in einem Wirbelschichttrockner, gegebenenfalls nach Zerkleinern des Polymers, durchgeführt werden.

Das erhaltene gereinigte Polymer weist einen deutlich verringerten Restmonomergehalt auf, der auch unterhalb der Nachweisgrenze liegen kann. Ein Restgehalt von weniger als etwa 0.5 Gew.-%, vorzugsweise 0.2 bis 0.4 Gew.%, ist jedoch in der Regel bereits ausreichend, um die gewünschten Qualitätsanforderungen für den pharmazeutischen oder medizinischen Bereich bereitzustellen.

Gegenstand der Erfindung ist auch eine Vorrichtung zur Durchführung des erfindungsgemäßen Verfahrens, wobei die obigen Ausführungen zum Verfahren gleichermaßen für die erfindungsgemäße Vorrichtung gelten.

Die vorliegende Erfindung bezieht sich ebenfalls auf die niedermolekularen, resorbierbaren Polyester, die gemäß dem erfindungsgemäßen Verfahren herstellbar sind, wobei der Kettenlängenmoderator ausgewählt ist aus einer Hydroxydicarbonsäure, bevorzugt Äpfelsäure (2-Hydroxybernsteinsäure), oder einer Hydroxytricarbonsäure, bevorzugt Zitronensäure.

Mit dem erfindungsgemäßen Verfahren herstellbare Polyester sind entweder Homopolyester oder Copolyester, je nach den ausgewählten Monomeren. Bevorzugte erfindungsgemäße Homopolyester sind Polylactide. Weiterhin bevorzugt sind Copolyester, die ausgewählt sind aus folgenden Gruppen: Polylactide, welche aus verschiedenen stereoisomeren Lactiden erhältlich sind, insbesondere Copolyester aus L-Lactid und D,L-Lactid, Copolyester aus Lactid und Glycolid, wobei das Lactid vorzugsweise D,L-Lactid und/oder L-Lactid darstellt.

Die nach dem erfindungsgemäßen Verfahren hergestellten Polyester weisen in der Regel eine mittlere inhärente Viskosität (Ubbelohde-Viskosimeter, Chloroform, 0.1%, 25°C) im Bereich von etwa 0.1 bis 1.0 dl/g, vorzugsweise im Bereich von etwa 0.1 bis 0.8 dl/g, auf. Die entsprechend niedrigen Molekulargewichte bewegen sich erfahrungsgemäß im Bereich von etwa 2.000 bis etwa 350.000 g/Mol (Dalton) auf, bevorzugter im Bereich von etwa 5.000 bis etwa 200.000 g/Mol.

In der Regel bedeutet ein höheres Molekulargewicht, dass der Abbau des Polyesters langsamer abläuft als im Falle eines niederen Molekulargewichts, da für den vollständigen Abbau mehr Bindungen zersetzt werden müssen. Die Polyester der vorliegenden Erfindung werden daher eher schneller resorbiert als Polyester mit höherem Molekulargewicht.

Die erfindungsgemäßen resorbierbaren Polyester verfügen über geeignete Resorptions-Charakteristika, d.h. diese sind bei der Herstellung und gegebenenfalls Weiterverarbeitung sowie bei Gebrauch stabil. Die Polyester können nach der Herstellung beispielsweise mehrere Jahre gelagert werden; erst bei Einsatz im/am Körper kommt es zur Resorption. Bei Einsatz in Form von pharmazeutischen Formulierungen hängt die Freisetzung häufig maßgeblich vom Abbau des verwendeten Polyesters ab, so dass mit der Abbauzeit auch die Freisetzung eines Wirkstoffs in gewünschter Weise gesteuert werden kann.

Der Begriff "resorbierbar" (lateinisch *resorbere* = "aufsaugen"), "Resorption" oder "abbaubar" oder "Abbau" im Zusammenhang mit einem erfindungsgemäßen Polymer, wie hier verwendet, bezeichnet ein Polymer, dessen molekulare Struktur in kleinere Einheiten zersetzt werden kann, ungeachtet des Abbaumechanismus. Der Begriff "Resorption" soll im Rahmen der Erfindung ganz allgemein als Stoffaufnahme in biologischen Systemen verstanden werden. Hierbei soll nicht zwischen passiver und aktiver Resorption unterschieden werden. Beispielsweise wird ein resorbierbares Polymer durch Hydrolyse der Esterbindung abgebaut bzw. zersetzt, wobei Wasser derart mit dem Polymer reagiert, dass aus dem Polymer kleinere, nicht-polymere Einheiten bis hin zu Monomeren gebildet werden. Die erfindungsgemäßen resorbierbaren Polymere sind daher hydrolytisch resorbierbar, was bedeutet, dass chemische Bindungen, im vorliegenden Fall die Esterbindung, im Polymer vorliegen, welche durch Wasser spaltbar sind, woraus kleinere Struktureinheiten resultieren.

Der Begriff "bioabbaubar" bezeichnet erfindungsgemäß im weitesten Sinne alle Materialien, die durch Mikroorganismen oder Enzyme z.B. im Körper abgebaut werden. In Zusammenhang mit einem erfindungsgemäßen Polymer, wie hier verwendet, bedeutet der Begriff "bioabbaubar", dass ein Polymer unter Einfluss von Wasser und ein oder mehreren Enzymen zu kleineren Einheiten abgebaut bzw. zersetzt wird. Beispielsweise wird Polymilchsäure durch Hydrolyse in Milchsäure zersetzt, die durch eine Vielzahl von Enzymen unter enzymatischer Zersetzung einem Bioabbau unterliegt.

Weiterhin können die Polyester der Erfindung für den tierischen oder menschlichen Körper zugelassene Hilfsstoffe enthalten.

Gegenstand der vorliegenden Erfindung ist auch die Verwendung der niedermolekularen, resorbierbaren Polyester, die gemäß dem erfindungsgemäßen Verfahren hergestellt werden, im pharmazeutischen oder medizinischen Bereich, insbesondere zur Herstellung pharmazeutischer Freigabesysteme.

Ein weiterer Aspekt der vorliegenden Erfindung stellt die Verwendung der niedermolekularen, resorbierbaren Polyester dar, die gemäß dem erfindungsgemäßen Verfahren hergestellt werden, zur Herstellung von resorbierbaren Implantaten zum Einsatz im menschlichen oder tierischen Körper, für Folien oder Membranen sowie pharmazeutische Formulierungen, insbesondere kontrollierte Freisetzungssysteme aller Art.

Nachfolgend wird die vorliegende Erfindung anhand von Figuren erläutert, welche die erfindungsgemäße Lehre veranschaulichen, diese aber nicht beschränken sollen.

### KURZE BESCHREIBUNG DER ZEICHNUNGEN

- Figur 1: veranschaulicht in einem Ablaufschema anhand einer beispielhaften Ausführungsform die Durchführung der Polymerisation gemäß dem erfindungsgemäßen Verfahren (Verfahrensschritte (a) bis (e));
- Figur 2: veranschaulicht in einem Ablaufschema anhand einer beispielhaften Ausführungsform die Durchführung der Reinigung des Rohpolymers durch Fällung gemäß dem erfindungsgemäßen Verfahren (Verfahrensschritt ((f) bis (h));
- Figur 3: veranschaulicht in einem Ablaufschema anhand einer beispielhaften Ausführungsform die Durchführung der Trocknung, gegebenenfalls nach Zerkleinern des Polymers, gemäß dem erfindungsgemäßen Verfahren (Verfahrensschritte (i) und (j));

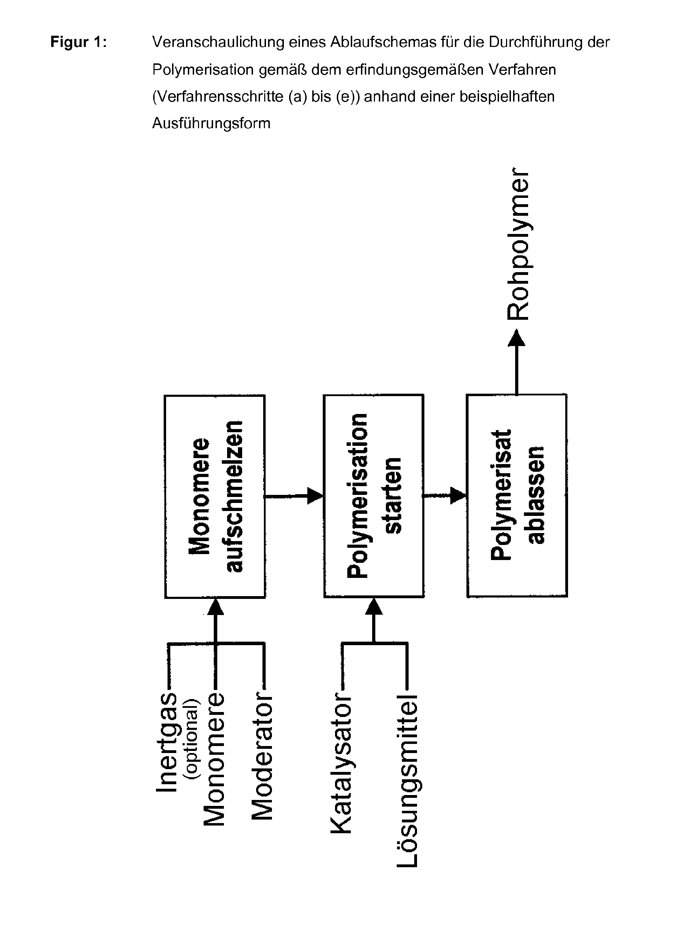

Im Einzelnen zeigt Figur 1 in einem Ablaufschema anhand einer beispielhaften Ausführungsform die Durchführung der Polymerisation gemäß dem erfindungsgemäßen Verfahren (Verfahrensschritte (a) bis (e)). Hierzu werden zunächst die Monomeren in einem Reaktionsgefäß bei Bedarf unter inerter Atmosphäre geschmolzen (Verfahrensschritt (a)). Der Ansatz kann in einem kleinen Maßstab oder in einem großindustriellen Maßstab gewählt werden.

Als Reaktionsgefäß kann beispielsweise ein Doppelmantelreaktor eingesetzt werden, der unter Stickstoffbegasung mit einer entsprechenden Menge cyclischer Monomeren befüllt wird. Die Menge wird abhängig vom Durchführungsmaßstab gewählt, beispielsweise von einigen Gramm bis zu einigen Kilogramm Monomeren. Der Doppelmantel des Reaktors wird dann zum Aufschmelzen der Monomeren auf eine erhöhte Temperatur, z.B. 100°C bis 200°C Außenmanteltemperatur, aufgeheizt.

Sobald die Monomeren, im gezeigten Beispielfall D,L-Lactid, vollständig geschmolzen sind, werden ein Kettenlängenmoderator und ein Katalysator zugegeben (Verfahrensschritte (b) und (c)). Der Katalysator wird immer erst nach dem Schmelzen der Monomeren zugesetzt. Der Kettenlängenmoderator kann vor, während oder nach erfolgtem Aufschmelzen der Monomeren zugegeben werden. Ansonsten ist die Zugabereihenfolge von Moderator und Katalysator nicht kritisch. Beide können auch gleichzeitig zugegeben werden. Die Zugabe kann in Form der reinen Substanz oder als Lösung in einem Lösungsmittel erfolgen. Die Reihenfolge der Verfahrensschritte (b) und (c) kann auch vertauscht werden, die Zugabe des Kettenlängenmoderators erfolgt dann vor Zugabe des Katalysators. Der Kettenlängenmoderator kann aber auch bereits zu den Monomeren in das Reaktionsgefäß gegeben und zusammen mit den Monomeren geschmolzen werden. Nach einer weiteren bevorzugten Ausführungsform der Erfindung kann der Katalysator auch im Kettenlängenmoderator gelöst und beide können zusammen zur Reaktion nach dem Schmelzen zugegeben werden. Es sollte jedoch beachtet werden, dass durch Zugabe des Katalysators die Polymerisation gestartet wird.

In Figur 1 wird gemäß einer bevorzugten Ausführungsform des erfindungsgemäßen Verfahrens zunächst der Kettenlängenmoderator zu den Monomeren zugegeben und anschließend der Katalysator in einem Lösungsmittel gelöst zugesetzt. Der Kettenlängenmoderator ist beispielsweise Äpfelsäure oder Zitronensäure; der Katalysator ist im gezeigten Beispielfall Zinn(II)-2-ethylhexanoat.

Die Katalysatormenge wird hier so berechnet, dass der Zinngehalt, bezogen auf die gesamte Reaktionsmasse, vorzugsweise im Bereich von etwa 30 bis 200 ppm liegt.

Zur Homogenisierung der erhaltenen Reaktionsmischung, die im Wesentlichen aufgebaut ist aus Monomeren, Katalysator und Kettenlängenmoderator, wird in der Regel durchmischt, vorzugsweise gerührt (Verfahrensschritt (d)).

Die sich anschließende Polymerisation (Verfahrensschritt (e)) erfolgt üblicherweise innerhalb von etwa 3 bis 24 Stunden, bevorzugt unter Rühren bei einer Temperatur, die vorzugsweise im Bereich von etwa 150°C bis 200°C liegt.

Je nach dem erwünschten Polymerisationsgrad kann die Polymerisation auch abgebrochen werden, und es kann bis zur gewünschten Umsetzung polymerisiert werden.

Es wird ein rohes Polymer oder Copolymer erhalten. Das Polymer oder Copolymer wird dann üblicherweise aus dem Reaktionsgefäß entnommen, beispielsweise kann das Reaktionsgefäß abgelassen oder entleert werden. Die Entleerung des Reaktors nach der Polymerisation kann zum Beispiel mittels konventioneller Pumpen, durch Schwerkraft oder auch durch Druckaufgabe mittels Inertgas, insbesondere Stickstoff erfolgen. Bei der Entleerung des Reaktionsgefäßes werden üblicherweise Proben genommen, die hinsichtlich der inhärenten Viskosität sowie auf ihren Restgehalt an Monomeren analysiert werden.

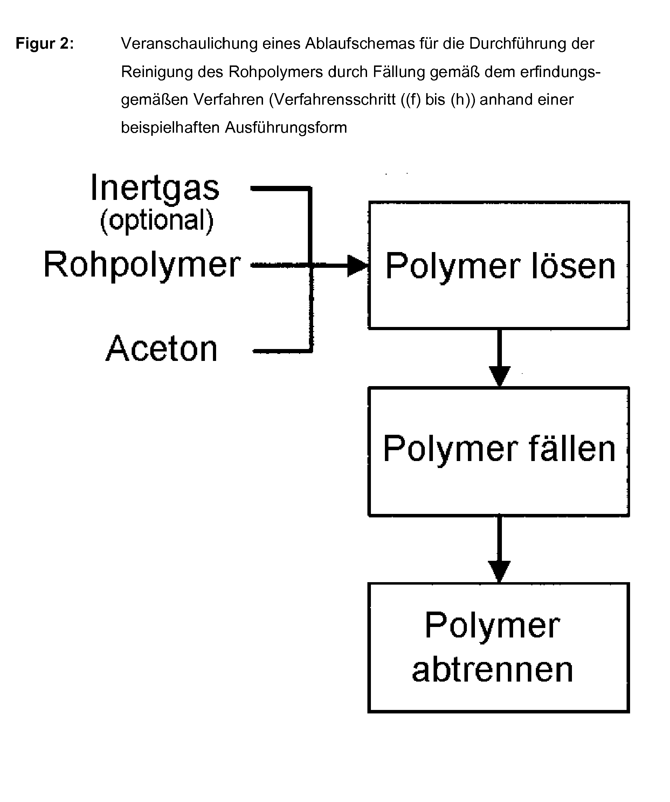

Das in Figur 2 im Einzelnen dargestellte Ablaufschema, welches die Reinigung durch Fällung gemäß dem erfindungsgemäßen Verfahren anhand einer beispielhaften Ausführungsform darstellt, schließt sich in der Regel unmittelbar an die Polymerisation gemäß dem Schema von Figur 1 an (Verfahrensschritt (f) bis (h)). Das erhaltene Rohpolymer kann aber auch zunächst gelagert und zu einem späteren Zeitpunkt gereinigt werden.

Das aus der Polymerisation erhaltene Rohpolymer wird zunächst in Aceton gelöst (Verfahrensschritt (f)). Vor der Ausfällung kann die Lösung durch Filtrieren gereinigt werden (nicht gezeigt). Die Ausfällung des gelösten Polymers erfolgt durch die Zugabe von einem Überschuss an Wasser, vorzugsweise entmineralisiertes Wasser, wodurch die verbliebenen Monomeren in Lösung bleiben und somit aus dem Polymer entfernt werden können (Verfahrensschritt (g)). Das erhaltene Polymer kann anschließend mit Wasser gewaschen werden. Die Abtrennung des gereinigten Polymers (Verfahrensschritt (h)) aus der Lösung kann üblicherweise durch Filtrieren, Absaugen oder dergleichen erfolgen.

Die Menge an Aceton zum Lösen des Rohpolymers sowie die Menge an Wasser zum Ausfällen hängen von der Art, dem Aufbau sowie der Menge des eingesetzten Rohpolymers ab. Der Fachmann kann diese Mengen durch einige orientierende Versuche ohne weiteres bestimmen.

Die Reinigung durch Lösen/Fällen/Abtrennen kann mehrfach wiederholt werden.

Das erhaltene gereinigte Polymer weist einen deutlich verringerten Restmonomergehalt auf, der in den meisten Fällen deutlich unterhalb von 0.5 Gew.-% liegt.

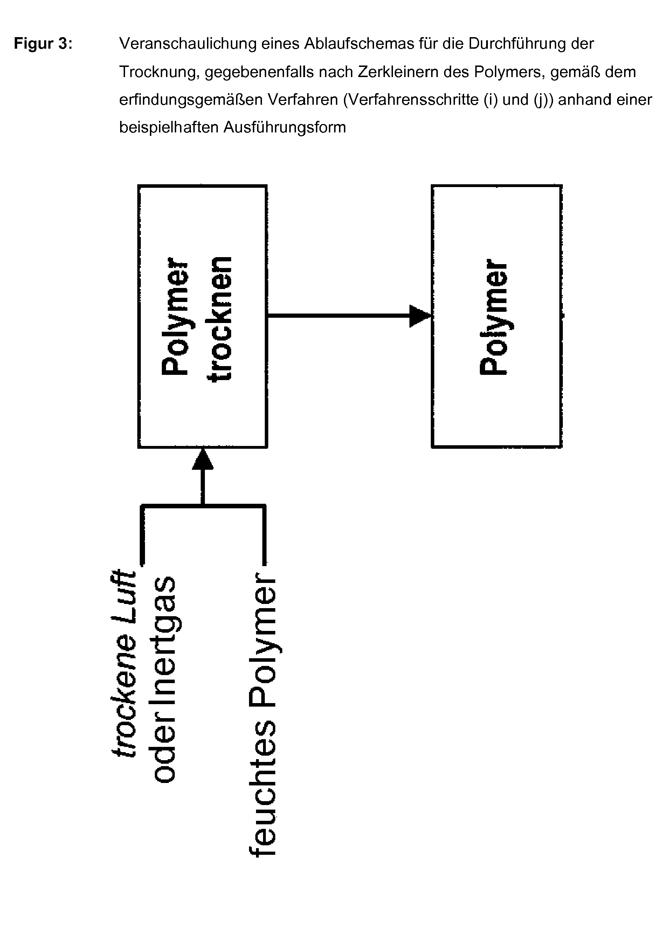

In Figur 3 ist in einem Ablaufschema anhand einer beispielhaften Ausführungsform die Trocknung, gegebenenfalls nach einem entsprechenden Zerkleinern des Polymers gemäß dem erfindungsgemäßen Verfahren (Verfahrensschritte (i) und (j)) dargestellt. Figur 3 schließt sich in der Regel unmittelbar an die Fällung gemäß dem in Figur 2 dargestellten Schema an, kann aber auch zu einem späteren Zeitpunkt durchgeführt werden. Das feuchte Polymer wird in einem üblichen Verfahren getrocknet und kann gegebenenfalls zusätzlich zerkleinert, verrieben und/oder gemischt werden.

Die Figuren 1 bis 3 verdeutlichen mögliche Ausführungsformen, sind jedoch nicht abschließend und damit auch nicht beschränkend im Hinblick auf den Schutzbereich des erfindungsgemäßen Verfahrens. Andere Verfahrensvarianten im Rahmen der Ansprüche sind je nach gewünschtem Eigenschaftsprofil denkbar.

Die nachfolgenden Beispiele dienen der Illustration exemplarisch durchgeführter Verfahren zur Herstellung der resorbierbaren Polyester. Sie sind lediglich als mögliche, beispielhaft dargestellte Vorgehensweisen zu verstehen, ohne die Erfindung auf deren Inhalt zu beschränken.

### AUSFÜHRUNGSBEISPIELE

### Beispiel 1

### Poly(D, L-lactid-co-glycolid)

D,L-Lactid und Glycolid werden im gewünschten Molmassenverhältnis zusammen mit 2.68 Gew.% 2-Hydroxybernsteinsäure aufgeschmolzen. Zum Starten der Reaktion werden 176 ppm Zinn(II)-Salz (typischerweise in der Form von Zinn(II)-2-ethylhexanoat) zugegeben. Die Reaktion erfolgt bei 185°C über mehrere Stunden bis die gewünschte Umsetzung erreicht ist. Das entstandene Rohpolymer wird in Aceton gelöst und durch Zugabe von Wasser gefällt um nicht umgesetzte Monomere zu entfernen. Im Anschluss an die Reinigung wird das feuchte Polymer getrocknet.

Das Polymer hat eine i.V. von 0.17 dl/g und eine Restmonomergehalt an Lactid von unter 0.5 Gew.-%. Die Säurezahl liegt bei 20.3 mg KOH/g.

### Beispiel 2

### Poly(D,L-lactid-co-glycolid)

Zur Herstellung des erfindungsgemäßen Polyesters in Form eines Poly(D,L-lactid-co-glycolids) wird ähnlich wie in Beispiel 1 vorgegangen. Im Einzelnen wird in einem Reaktor D,L-Lactid und Glycolid aufgeschmolzen. Anschließend wird Zinn(II)-2-ethylhexanoat, gelöst in Toluol, und 0.6 Gew.-% Kettenregler (D,L-Milchsäureethylester) zugegeben. Die Katalysatormenge ist so berechnet, dass der Zinngehalt, bezogen auf die gesamte Reaktionsmasse 40 ppm beträgt. Nach der gewünschten Reaktionszeit wird das Polymer abgelassen. Die entnommenen Proben lieferten folgende Analysenwerte:
Inhärente Viskosität (CHCl₃, 25°C, 0.1 %): 0.24 dl/g
Restmonomergehalt D,L-Lactid (GC): 1.5 Gew.-%

Das entstandene Rohpolymer wird wie in Beispiel 1 beschrieben durch Lösen in Aceton und Fällung in Wasser gereinigt und anschließend getrocknet. Der Restmonomerengehalt lag nach der Reinigung unterhalb der Nachweisgrenze.

### Beispiel 3

Ein zu Beispiel 2 analog hergestelltes Polymer, aber mit 0,9 % Kettenregler (D,L-Milchsäureethylester) zeigte in der Rohware folgende Analysenergebnisse:
Inhärente Viskosität (CHCl₃, 25°C, 0.1 %): 0.32 dl/g
Restmonomergehalt D,L-Lactid (GC): 1.3 Gew.-%

Das durch Fällung, wie in Beispiel 1 beschrieben, gereinigte Polymer hat im DSC einen Glasumwandlungspunkt Tg von 42.5°C.

Ein Vergleich der Glasumwandlungspunkte zeigt bei der Verwendung unterschiedlicher Kettenlängenreglern, dass bei den 50:50 Copolymeren aus D,L-Lactid und Glycolid, die unter Verwendung von 1-Dodecanol hergestellt wurden, der Glasumwandlungspunkt um 3-5°C niedriger ist als bei vergleichbaren mit Hydroxycarbonsäure oder Milchsäureethylester als Kettenlängenmoderator hergestellten Polymeren.

### Beispiel 4

### Poly(D, L-lactid-co-glycolid)

D,L-Lactid und Glycolid werden im gewünschten Molmassenverhältnis zusammen mit 3.84 Gew.% Zitronensäure wasserfrei aufgeschmolzen. Zum Starten der Reaktion werden 180 ppm Zinn(II)-Salz (typischerweise in der Form von Zinn (II) Chlorid Dihydrat) zugegeben. Die Reaktion erfolgt bei 185°C über mehrere Stunden (24 Stunden) bis die gewünschte Umsetzung (bevorzugter Restmonomergehalt < 5%) erreicht ist.

Das entstandene Rohpolymer wird in Aceton gelöst und durch Zugabe von Wasser gefällt, um nicht umgesetzte Monomere zu entfernen. Im Anschluss an die Reinigung wird das feuchte Polymer getrocknet.

Das Polymer hat eine i.V. von 0.10 dl/g, einen Restmonomergehalt an Lactid von 0.07% und einen Restmonomergehalt an Glycolid unter 0.05 %. Die Säurezahl liegt bei 35 mg KOH/g.

## Patentansprüche

1. Verfahren zur Herstellung von resorbierbaren Polyestern, umfassend die Schritte
(a) Aufschmelzen von Monomeren in einem Reaktionsgefäß;
(b) Zugeben von Katalysator;
(c) Zugeben von Kettenlängenmoderator, der ausgwählt ist aus der Gruppe bestehend aus Hydroxydicarbonsäuren und Hydroxytricarbonsäuren;
(d) Homogenisieren der Reaktionsmischung;
(e) Durchführen der Polymerisationsreaktion bis zum erwünschten Umsetzungsgrad der Polymerisation;
(f) Lösen des erhaltenen Rohpolymers in Aceton;
(g) Ausfällen des Polymers durch Zugeben von Wasser;
(h) Abtrennen des erhaltenen Polymers;
(i) gegebenenfalls Zerkleinern des erhaltenen Polymers und
(j) Trocknen des Polymers.

2. Verfahren nach Anspruch 1, dadurch gelennzeichnet, dass der Kettenlängenmorderator ausgewählt ist aus der Gruppe bestehend aus Äpfelsäure und Zitronensäure.

3. Verfahren nach Anspruch 1 oder 2, **dadurch gekennzeichnet, dass** Verfahrensschritt (a), Verfahrensschritt (d), Verfahrensschritt (e) und/oder Verfahrensschritt (g) unter Durchmischen, vorzugsweise Rühren, durchgeführt werden.

4. Verfahren nach Anspruch 1, 2 oder 3, **dadurch gekennzeichnet, dass** das erhaltene Polymer nach Schritt (e) aus dem Reaktionsgefäß durch Entleeren des Reaktionsgefäßes entnommen wird, wie durch konventionelles Pumpen, unter Verwendung von Schwerkraft oder durch Druckaufgabe mittels Inertgas, insbesondere Stickstoff.

5. Verfahren nach Anspruch 1, 2, 3 oder 4, **dadurch gekennzeichnet, dass** der Katalysator nach dem Aufschmelzen der Monomeren und der Kettenlängenmoderator vor, während oder nach dem Aufschmelzen der Monomeren zugegeben werden.

6. Verfahren nach Anspruch 1, 2, 3, 4 oder 5, **dadurch gekennzeichnet, dass** als Reaktionsgefäß ein Rührreaktor eingesetzt wird.

7. Verfahren nach Anspruch 1, 2, 3, 4, 5 oder 6, **dadurch gekennzeichnet, dass** nach dem Lösen des erhaltenen Rohpolymers in Aceton gemäß Schritt (f) die Lösung zum Entfernen von Verunreinigungen filtriert wird.

8. Verfahren nach Anspruch 1, 2, 3, 4, 5, 6 oder 7, **dadurch gekennzeichnet, dass** das ausgefällte Polymer kontinuierlich aus der Lösung entfernt wird.

9. Verfahren nach Anspruch 1, 2, 3, 4, 5, 6, 7 oder 8, **dadurch gekennzeichnet, dass** die Monomeren ausgewählt sind aus ein oder mehreren cyclischen Esterverbindungen, insbesondere Glycolid, Lactid, wie beispielsweise L-Lactid, D-Lactid, D,L-Lactid, meso-Lactid, beta-Propiolacton, gamma-Butyrolacton, delta-Valerolacton, epsilon-Caprolacton, 3-Methyl-1,4-dioxa-2,5-dion, p-Dioxanon, Morpholin-2,5-dion, Morpholin-2-on und Mischungen dieser, besonders bevorzugt L-Lactid, D-Lactid, D,L-Lactid, meso-Lactid und Glycolid sowie Mischungen dieser.

10. Verfahren nach Anspruch 1, 2, 3, 4, 5, 6, 7, 8 oder 9, **dadurch gekennzeichnet, dass** die Reaktion bei einer Temperatur im Bereich von etwa 150°C bis etwa 200°C durchgeführt wird.

11. Verfahren nach Anspruch 1, 2, 3, 4, 5, 6, 7, 8, 9 oder 10, **dadurch gekennzeichnet, dass** als Katalysator eine Zinnverbindung, bevorzugt Zinn(II)-2-ethylhexanoat oder Zinn-IIchlorid Dihydrat, in einer Konzentrationen im Bereich von etwa 10 bis etwa 250 ppm, bevorzugt etwa 30 bis etwa 200 ppm (jeweils berechnet als Zinn, bezogen auf die gesamte Reaktionsmasse) verwendet wird.

12. Resorbierbare Polyester, hergestellt nach einem Verfahren gemäß Anspruch Anspruch 1, 2, 3, 4, 5, 6, 7, 8, 9, 10 oder 11.

13. Resorbierbare Polyester nach Anspruch 12, **dadurch gekennzeichnet, dass** diese eine mittlere inhärente Viskosität im Bereich von etwa 0.1 bis 1.0 dl/g, vorzugsweise im Bereich von etwa 0.1 bis 0.8 dl/g, aufweisen.

14. Verwendung der resorbierbaren Polyester nach Anspruch 12 oder 13 im pharmazeutischen oder medizinischen Bereich, insbesondere für pharmazeutische Formulierungen, pharmazeutische Freisetzungssysteme, resorbierbare Implantate, Folien oder Membranen.

15. Vorrichtung zur Durchführung des Verfahren zur Herstellung von resorbierbaren Polyestern nach einem der Ansprüche 1 bis 11, umfassend
(a) ein Reaktionsgefäß zum Aufschmelzen und Polymerisieren von Monomeren;
(b) eine Vorrichtung zum Lösen des erhaltenen Rohpolymers in Aceton und Ausfällen durch Zugabe von Wasser;
(c) eine Vorrichtung zum Abtrennen des erhaltenen Polymers sowie
(d) eine Vorrichtung zum Trocknen des erhaltenen Polymers.
